# FASCICULE DE BREVET EUROPEEN

(11) **EP 3 527 823 B1**
(45) Date de publication et mention de la délivrance du brevet: **26.08.2020**
(21) Numéro de dépôt: 18167794.9
(22) Date de dépôt: 17.04.2018
(51) Int. Cl.: F04B 17/04, H02K 33/16

(54) **POMPE À PISTON OSCILLANT COMPRENANT UN ÉLÉMENT DE STRUCTURE MONOBLOC PRÉSENTANT UN PREMIER ET UN SECOND CORPS TUBULAIRES CREUX**
SCHWINGKOLBENPUMPE, DIE EIN MONOBLOCK-STRUKTURELEMENT UMFASST, DAS EINEN ERSTEN UND EINEN ZWEITEN HOHLROHRKÖRPER AUFWEIST
OSCILLATING PISTON PUMP COMPRISING A SINGLE-PIECE STRUCTURAL MEMBER HAVING FIRST AND SECOND HOLLOW TUBULAR BODIES

(30) Priorité: 16.02.2018 FR 1851355
(43) Date de publication de la demande: 21.08.2019
(73) Titulaire: Sauermann Industrie, 77173 Chevry-Cossigny (FR)
(72) Inventeur: SARDET, François, 77380 COMBS-LA-VILLE (FR); DE GEA, Olivier, 91770 SAINT VRAIN (FR); BOUSSUGE, Jean-Baptiste, 24680 LAMONZIE-SAINT-MARTIN (FR); CLEVELAND, Didier, 33660 GOURS (FR)
(74) Mandataire: Vidon Brevets & Stratégie

(56) Documents cités:
- FR-A- 1 554 354
- US-A- 4 775 301
- US-A1- 2004 146 417
- US-A1- 2012 251 359

## Description

### 1. Domaine technique de l'invention

Le domaine de l'invention est celui des dispositifs de pompage pour le relevage de condensats, destinés à être mis en œuvre dans des systèmes produisant des condensats, notamment des systèmes de climatisation, des systèmes de réfrigération, des systèmes de ventilation ou des systèmes de chauffage.

L'invention concerne plus particulièrement une pompe électromagnétique à piston magnétique oscillant.

### 2. Arrière-plan technologique

Les pompes électromagnétiques à piston oscillant sont aujourd'hui utilisées dans de nombreuses applications, parmi lesquelles les machines à cafés, les distributeurs automatiques, les centrales de repassage à vapeur, les systèmes d'irrigation, les systèmes de climatisation, l'industrie automobile, etc.

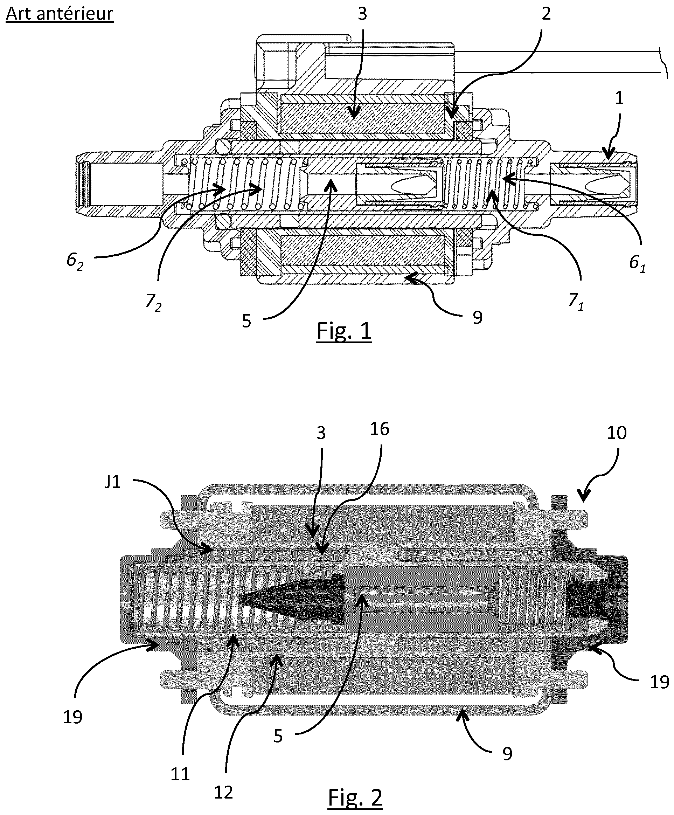

Dans ces différentes applications, il est connu d'utiliser une pompe électromagnétique dont un exemple est représenté à la **figure 1****.**

Une telle pompe comprend :
- un premier corps 1 creux essentiellement tubulaire, ou chemise, s'étendant le long d'une direction longitudinale,
- un second corps 2 creux essentiellement tubulaire, ou porte-bobine, s'étendant le long d'une direction longitudinale autour du premier corps 1,
- une bobine 3 alimentée par un courant alternatif redressé formant un électro-aimant,
- un piston magnétique 5 monté mobile longitudinalement à l'intérieur du premier corps 1, le piston étant lui-même creux et traversant longitudinalement,
- une chambre d'aspiration 6₂ de fluide et une chambre de refoulement 6₁ localisées de chaque côté du piston,
- deux ressorts 7₂, 7₁ montés respectivement dans la chambre d'aspiration 6₂ et s'étendant entre l'entrée de fluide et le piston magnétique 5 et dans la chambre de refoulement 6₁ et s'étendant entre le piston magnétique 5 et la sortie de fluide,
- une carcasse 9 magnétique extérieure et le cas échéant au moins deux bagues magnétiques de canalisation du flux magnétique.

Le champ magnétique créé par la bobine 3 formant un électro-aimant entraîne des déplacements axiaux alternatifs du piston 5 à l'intérieur de la chemise 1.

Chaque va-et-vient du piston 5 entraîne alors l'aspiration des condensats à l'intérieur de la chambre d'aspiration 6₂, puis le refoulement des condensats vers la chambre de refoulement 6₁.

Le principe général de fonctionnement d'une telle pompe est décrit dans l'état de l'art du document de brevet EP2388481, délivré au nom du Demandeur.

Comme constaté sur la pompe de la **figure 1**, les pompes actuellement utilisées mettent en œuvre un grand nombre de pièces, qui doivent être assemblées avec précision pour permettre au dispositif de fonctionner de manière optimale.

La fabrication et le montage qui en résultent sont donc relativement complexes.

Par ailleurs, une fois la pompe assemblée, des contraintes transversales non négligeables peuvent être exercées sur la chemise 1, notamment ses extrémités, tendant à la déformer et ainsi à lui faire perdre sa rectitude.

Il existe alors un risque que le piston 5 vienne frotter contre les parois de la chemise 1 au cours de son déplacement, et que ses mouvements de va-et-vient soient entravés.

Il en résulte alors une perte d'efficacité de la pompe et de faibles performances hydrauliques, voire des risques d'usure ou de blocage. Ceci est bien sûr problématique, en particulier dans les applications où la pompe doit fonctionner pendant de longues périodes de temps (plusieurs mois, voire années) sans intervention, et/ou où une panne peut entrainer des débordements.

Un autre exemple de pompe est décrit dans le document US2004146417, également constitué de plusieurs éléments nécessitant l'assemblage précis et complexe.

Il existe donc un besoin de disposer d'une pompe électromagnétique à piston oscillant présentant, à géométrie équivalente, une architecture simplifiée et dont le montage soit par conséquent facilité.

Il existe également un besoin de disposer d'une pompe qui soit plus robuste que les pompes de l'état de la technique.

Par ailleurs, dans les dispositifs de pompage actuels, les tubulures d'entrée et de sortie des condensats, assemblées par un technicien/installateur, sont généralement connectées directement sur les extrémités de la chemise 1, et généralement maintenues en position grâce à un collier métallique monté de manière irréversible sur l'extrémité de la tubulure et l'extrémité correspondante de la chemise.

Lorsqu'il est nécessaire d'effectuer la maintenance de la pompe, par exemple lorsqu'une fuite est détectée, le technicien doit couper la tubulure pour pouvoir extraire la pompe.

Il en résulte une perte de temps et une perte de ressources (la tubulure doit généralement être changée car elle n'est plus à la bonne dimension), et par conséquent une perte économique pour l'installateur.

Il existe en conséquence également un besoin de fournir une pompe qui puisse coopérer de manière amovible avec des tubulures d'entrée et sortie des condensats aux extrémités de la chemise, de façon à gagner en efficacité lors des opérations de maintenance de la pompe.

### 3. Résumé de l'invention

La présente invention a pour objectif de répondre à ces problématiques de l'art antérieur.

Ces objectifs, ainsi que d'autres qui apparaîtront par la suite, sont atteints à l'aide d'une pompe à piston oscillant comprenant :
- un premier corps tubulaire creux dans lequel se déplace un piston ;
- un second corps tubulaire creux s'étendant autour dudit premier corps tubulaire creux, portant un solénoïde contrôlant le déplacement dudit piston.

Selon l'invention, ledit premier corps tubulaire et ledit second corps tubulaire forment un élément de structure monobloc.

Cet élément de structure constitue ainsi une unique pièce monobloc qui remplace de façon simple et efficace plusieurs pièces, parfois de petite taille, notamment la chemise, le porte-bobine, l'entrefer..., qui doivent être assemblées entre elles avec précision dans les pompes de l'art antérieur. Il permet de simplifier l'architecture de la pompe et de gagner du temps sur les opérations d'assemblage.

Par ailleurs, on diminue fortement voire supprime le risque de mal assembler les pièces au montage, ce qui réduit les risques de dysfonctionnement de la pompe.

Cette nouvelle architecture présente également un intérêt économique puisque l'élément de structure monobloc est moins coûteux à fabriquer que la pluralité de pièces mises en œuvre dans l'art antérieur.

Selon un mode de réalisation particulier de l'invention, ledit élément de structure monobloc présente au moins une nervure de solidarisation reliant ledit premier corps tubulaire et ledit second corps tubulaire.

Cette nervure permet de créer une liaison entre le premier élément tubulaire et le second élément tubulaire de façon à former l'élément monobloc. Elle permet également de maintenir à distance le premier élément tubulaire et le second élément tubulaire de façon à ce qu'un intervalle subsiste entre eux, et qu'en d'autres termes les deux éléments ne soient pas en contact.

Ainsi, les deux éléments sont sensiblement indépendants en termes de contraintes, c'est-à-dire que les efforts - notamment transversaux - exercés sur le second corps tubulaire ne sont pas transmis au premier corps tubulaire. Ceci permet au premier corps tubulaire de conserver une rectitude optimale pour que la trajectoire du piston ne soit pas perturbée. Sans déformation des parois internes du premier corps tubulaire, la performance hydraulique et la fiabilité de la pompe sont optimisées.

Selon un mode de réalisation particulier de l'invention, ledit élément de structure monobloc présente au moins une nervure centrale de solidarisation.

Le positionnement central de la nervure permet d'assurer une répartition homogène des efforts au sein de l'élément de structure monobloc et de simplifier les opérations de fabrication de cet élément, ainsi que l'assemblage de pièces montées sur ou dans l'élément de structure.

Selon un mode de réalisation particulier de l'invention, ledit élément de structure monobloc présente un intervalle destiné à recevoir au moins une bague magnétique, notamment deux bagues, et présente des parois perpendiculaires à l'axe desdits premier et second corps tubulaires, coopérant avec une carcasse magnétique.

L'élément de structure monobloc est ainsi conçu pour que soient aisément installés les éléments nécessaires la canalisation du flux de la bobine, la ou les bagues magnétiques étant par exemple glissées autour du premier corps tubulaire dans l'intervalle dédié, puis la carcasse magnétique étant fixée sur les parois d'extrémité.

Selon un mode de réalisation particulier de l'invention, ladite pompe comprend des moyens de contrôle de la position longitudinale de la ou des bagues magnétiques placés entre ledit premier corps tubulaire et ledit second corps tubulaire.

Selon un mode de réalisation particulier de l'invention, lesdits moyens de contrôle de la position des bagues magnétiques et/ou ladite nervure de solidarisation définissent un entrefer.

Ainsi, les moyens de contrôle de la position des bagues magnétiques peuvent définir à la fois l'entrefer, nécessaire au fonctionnement de la pompe, et le positionnement des bagues magnétiques le long du premier corps tubulaire, de part et d'autre de l'entrefer, ainsi que leur alignement.

Selon un mode de réalisation particulier de l'invention, ledit premier corps tubulaire présente à au moins une de ses extrémités une portion prévue pour accueillir un système anti-retour.

Dans l'invention, le système anti-retour est donc intégré à l'élément de structure monobloc, et ne constitue donc plus une pièce rapportée sur la premier corps tubulaire comme dans l'art antérieur. Il en découle un gain de temps d'assemblage, de coût et de fiabilité de la pompe.

Selon un mode de réalisation particulier de l'invention, ledit second corps tubulaire porte des moyens de connexion d'un embout fixe apte à coopérer, de façon directe ou indirecte, avec un embout amovible.

Des embouts fixes peuvent ainsi être fixés de part et d'autre du second corps tubulaire de façon à encapsuler les composants de la pompe. Les éventuelles contraintes d'assemblage sont exercées sur le second corps tubulaire, et non sur le premier corps tubulaire, ce qui permet de conserver une rectitude optimale du premier corps tubulaire.

Selon un mode de réalisation particulier de l'invention, ladite pompe comprend des moyens mobiles de verrouillage aptes à coopérer avec ledit embout amovible, dans une position verrouillée, et permettant le retrait dudit embout amovible, dans une position déverrouillée.

Les embouts amovibles, montés à l'extrémité de tubulures de condensats, peuvent ainsi facilement être connectés à la pompe et déconnectés de la pompe respectivement, en faisant coopérer ou non les moyens mobiles de verrouillage avec les embouts amovibles. Les embouts amovibles peuvent ainsi être facilement connectés et déconnectés de la pompe sans que les tubulures ne soient démontées, ce qui constitue un gain de temps et de ressources pour les techniciens.

Selon un mode de réalisation particulier de l'invention, lesdits moyens mobiles de verrouillage comprennent une languette mobile en translation, venant se loger dans une gorge de l'embout amovible.

Ces moyens de verrouillage constituent une solution simple et relativement peu coûteuse.

Selon un mode de réalisation particulier de l'invention, ladite pompe comprend un boîtier portant lesdits moyens mobiles de verrouillage.

Par soucis de simplification, le boîtier de protection de la pompe intègre directement dans sa structure les moyens de verrouillage des embouts. Ainsi les moyens de verrouillage sont positionnés de manière optimale pour leur coopération avec les embouts.

### 4. Liste des figures

D'autres buts, caractéristiques et avantages de l'invention apparaîtront à la lecture de la description suivante donnée à titre uniquement illustratif et non limitatif, et qui se réfère aux figures annexées, dans lesquelles :
- la **figure 1** est une vue en coupe longitudinale d'une pompe de l'art antérieur telle que décrite précédemment,
- la **figure 2** est une vue en coupe longitudinale d'une pompe selon un mode de réalisation de l'invention,
- la **figure 3** est une vue en trois dimensions de l'élément de structure monobloc de la pompe, comprenant un premier et un second corps tubulaires creux, selon un mode de réalisation de l'invention,
- les **figures 4** **et** **5** illustrent schématiquement, en coupe, l'élément de structure monobloc représenté à la figure 3,
- la **figure 6** représente le dispositif de pompe comportant la pompe de la figure 2 mise en place au sein d'un boîtier de protection comprenant des extrémités conçues pour coopérer avec des embouts amovibles.
- la **figure 7** est une vue en trois dimensions du dispositif de pompe dans lequel les embouts amovibles coopèrent avec les extrémités de la pompe et sont verrouillés à l'intérieur du boîtier de protection,
- la **figure 8** est une vue en trois dimensions du dispositif de pompe dans lequel les embouts amovibles sont désolidarisés des extrémités de la pompe.

### 5. Description détaillée d'un mode de réalisation de l'invention

### 5.1 Principe général

Le principe général de l'invention repose sur une nouvelle approche de l'architecture d'une pompe électromagnétique à piston oscillant, simplifiée par rapport aux pompes de l'art antérieur.

La pompe à piston oscillant met ainsi en œuvre, selon l'invention, un unique élément, appelé élément de structure monobloc, comprenant un premier corps tubulaire creux, ou chemise, dans lequel se déplace un piston, et un second corps tubulaire creux, ou porte-bobine, qui s'étend autour du premier corps tubulaire et porte un solénoïde alimenté par un courant électrique, formant ainsi un électro-aimant permettant de contrôler le déplacement du piston.

En d'autres termes, le premier corps tubulaire creux et le second corps tubulaire creux constituent une seule et même pièce.

L'architecture de cette pompe est ainsi fortement simplifiée par rapport aux pompes qui existent actuellement et qui mettent en œuvre un nombre relativement élevé de pièces : en effet dans l'invention une unique pièce, l'élément de structure monobloc, remplace à la fois la chemise, le porte-bobine, et, selon les modes de réalisation, l'entrefer et la bague porte-clapet des pompes de l'art antérieur.

Par conséquent l'assemblage de la pompe s'en trouve fortement simplifié puisque le nombre total de pièces est diminué et qu'il n'est donc plus nécessaire d'assembler entre elles, avec précision, les différentes pièces, plus ou moins petites, des pompes existantes.

Le risque d'erreurs au montage et de mise en œuvre est également réduit, et la fiabilité de la pompe améliorée.

Cette architecture de pompe simplifiée représente par ailleurs un gain économique non négligeable, puisqu'il y a moins de pièces à fabriquer, et que par conséquent moins de temps (main d'œuvre ou machine) est alloué aux opérations de fabrication, d'assemblage et de contrôle.

Les **figures 2 à 5** illustrent une pompe électromagnétique à piston oscillant selon un mode de réalisation particulier de l'invention.

Les éléments identiques aux éléments de l'art antérieur illustrés sur la **figure 1** portent les mêmes références numériques (bobine 3, piston 5, carcasse magnétique 9, bagues magnétiques 16).

### 5.2 Elément de structure monobloc

Selon ce mode de réalisation, la pompe comprend un unique élément de structure 10 qui remplace les quatre pièces distinctes classiquement utilisées dans les pompes de l'art antérieur, à savoir une chemise, un porte-bobine, un entrefer et au moins une bague porte-clapet.

Cet élément de structure 10 est un élément monobloc, par exemple en plastique, obtenu par exemple par injection, qui comprend un premier corps 11 creux essentiellement tubulaire, ou fût interne, et un second corps 12 creux essentiellement tubulaire, ou fût externe, enveloppant le premier corps 11.

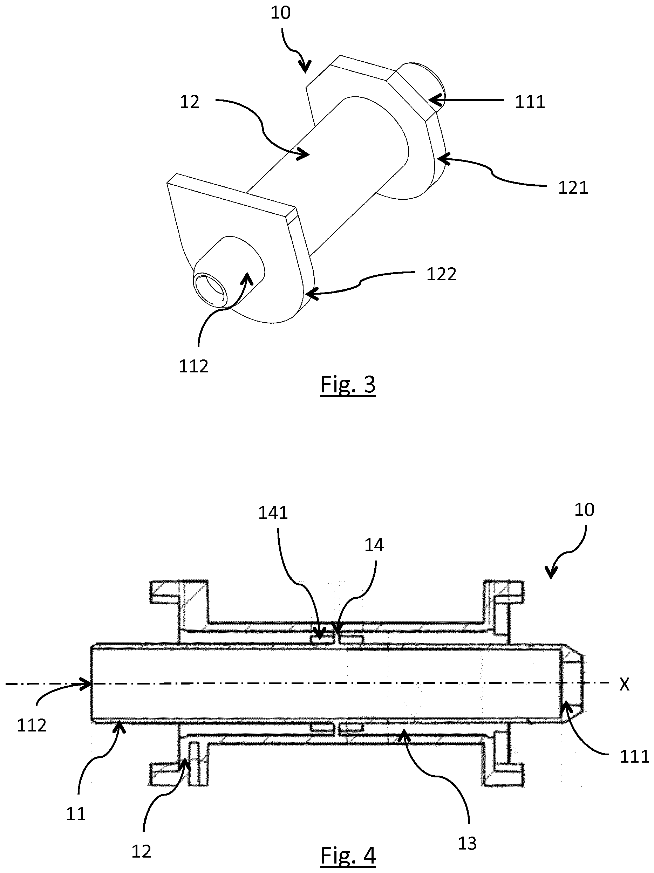

L'élément de structure monobloc est plus spécifiquement illustré sur les **figures 3 à 5****.**

Le fût interne 11 présente une forme essentiellement cylindrique, à base circulaire, et s'étend selon l'axe longitudinal X de la pompe.

Il est traversant et comprend donc deux extrémités ouvertes : une première extrémité 111, correspondant à une zone d'entrée des condensats, et une seconde extrémité 112, correspondant à la zone de sortie des condensats.

Selon un mode de réalisation particulier, au niveau de la première extrémité 111 est intégrée une zone dite «porte-clapet » permettant d'accueillir un système anti-retour, reproduisant les fonctions d'une bague porte-clapet rapportée de l'art antérieur.

Selon un autre mode de réalisation, chacune des extrémités 111, 112 pourrait intégrer un porte-clapet. Il est également possible de prévoir, dans une variante, que des bagues porte-clapet soient rapportées.

Le fût externe 12 présente également une forme sensiblement cylindrique, à base circulaire, et s'étend selon l'axe longitudinal X de la pompe.

Les extrémités du fût externe 12 présentent par ailleurs deux plaques 121, 122, ou plateaux, présentant des portions sensiblement circulaires ou rectangulaires, et s'étendant perpendiculairement à l'axe longitudinal X du fût et de la pompe.

Ces deux plaques 121, 122 délimitent un logement de réception d'un bobinage 3, illustrée sur la **figure 2****.**

Le fût interne 11, quant à lui est destiné à recevoir un piston 5 monté mobile longitudinalement entre des ressorts associés, de façon à effectuer des déplacements axiaux alternatifs sous l'effet du champ magnétique créé par le bobinage 3 alimenté en courant électrique, selon le principe décrit dans le document EP2388481 susmentionné.

Le support monobloc 10 peut être muni de moyens de fixation tels que des pattes d'accrochage, clips,... ou être solidarisé par vissage ou collage à un support.

Le fût interne 11 et le fût externe 12 sont reliés, selon ce mode de réalisation, par une nervure 14 placée de manière centrale, c'est-à-dire selon un plan perpendiculaire à l'axe longitudinal X de la pompe, situé sensiblement à équidistance des extrémités du fût interne 11 et des extrémités du fût externe 12.

Cette nervure 14 prend ici la forme d'un anneau, s'étendant sur au moins une partie de la périphérie du fût interne 11, et permet de solidariser le fût interne 11 et le fût externe 12.

Le rôle de la nervure 14 est donc d'une part de créer une liaison entre les deux fûts 11, 12, pour former un élément monobloc, et d'autre part de maintenir le fût externe 12 à distance du fût interne 11 de façon qu'un intervalle 13 subsiste entre le diamètre externe du fût interne 11 et le diamètre interne du fût externe 12.

Il en résulte que le fût interne 11 et le fût externe 12 sont pratiquement indépendants en termes de contraintes exercées, c'est-à-dire que les efforts transversaux exercés sur le fût externe 12 par le bobinage et/ou par l'assemblage d'embouts fixes 19 et/ou de bagues magnétiques 16 ne sont pas transmis au fût interne 11.

La cylindricité du fût interne 11 n'est donc pas impactée par des contraintes subies par le fût externe, ce qui permet au piston 5 d'effectuer ses mouvements de va-et-vient sans frottements intempestifs.

Sans déformation des parois du fut interne 11, la performance hydraulique et la fiabilité de la pompe sont optimisées.

### 5.3 Autres éléments de la pompe

La pompe électromagnétique selon l'invention comprend, outre l'élément de structure monobloc 10 décrit précédemment, plusieurs pièces additionnelles nécessaires à son fonctionnement, qui sont décrites par la suite.

Comme visible sur la **figure 4****,** une ou plusieurs nervures 141 supplémentaires sont placées dans l'intervalle 13, de part et d'autre de la nervure principale 14 et à proximité de celle-ci.

Les nervures 141 peuvent notamment prendre la forme de deux anneaux mis en place de part et d'autre de la nervure 14.

Elles délimitent, avec la nervure 14, la zone d'entrefer nécessaire au bon fonctionnement de la pompe.

L'intervalle 13 reçoit également deux bagues magnétiques 16, visibles sur la **figure** 2, placées de part et d'autre de l'entrefer et calées sur le fût externe 12, c'est-à-dire de part et d'autre des nervures 141.

Ces bagues 16 participent à la canalisation du flux magnétique créé par la bobine.

L'intervalle 13 entre les deux fûts 11, 12 est suffisamment grand pour qu'il subsiste un jeu J1 relativement important de quelques 1/10 mm entre le diamètre interne des bagues magnétiques 16, une fois montées, et le diamètre externe du fût interne 11.

Ce jeu J1 permet d'assurer que le fût interne 11 soit réellement indépendant du fût externe 12.

L'architecture simplifiée de la pompe telle que proposée par l'invention permet ainsi de réduire fortement les contraintes d'assemblage et/ou de fonctionnement appliquées sur le premier corps tubulaire, ou fût interne, qui peuvent entraîner une dégradation des performances hydrauliques.

Une carcasse en matériau magnétique 9, est montée sur le fût externe 12. Puis deux embouts fixes 19, visibles sur les **figures 2** **et** **6 à 8****,** comprenant chacun un passage traversant destiné à la circulation des condensats, maintiennent encapsulés tous les composants de la pompe.

Les embouts fixes 19 peuvent par exemple être fixés de chaque côté du support monobloc grâce à des bouterolles formées sur le fût externe du support monobloc, grâce à des vis, de la colle, des clips ou tout autre moyen de fixation de l'état de l'art

Les embouts fixes 19 sont astucieusement réalisés afin de pouvoir coopérer avec des embouts amovibles 30 décrits au paragraphe 5.4.

Dans le mode de réalisation décrit, ils sont réalisés dans deux matières, à savoir une partie en plastique et une partie formant joint, afin d'assurer une étanchéité entre les embouts fixes 19, le fût interne 11 et les embouts amovibles 30 et/ou les orifices 211, 221.

La carcasse magnétique 9 est réalisée dans un matériau adapté connu de l'art antérieur.

L'invention ne se limite bien sûr pas au seul mode de réalisation décrit. En particulier, une pompe selon l'invention peut présenter une géométrie et une architecture différentes sans néanmoins porter atteinte aux améliorations apportées par la pompe décrite à titre d'exemple.

### 5.4 Embout amovible

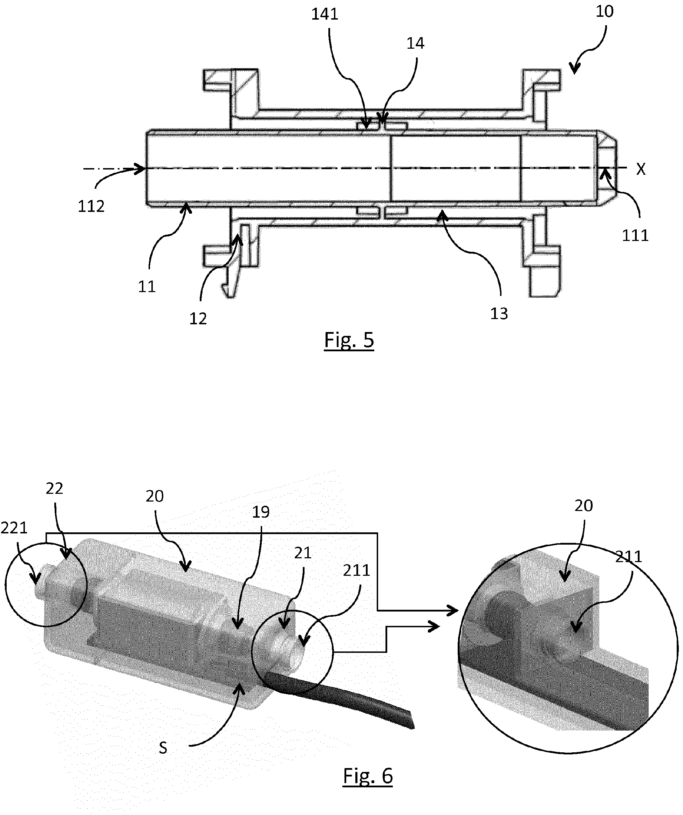

Selon un autre aspect, optionnel et pouvant être mise en œuvre indépendamment des aspects décrits précédemment, présenté en relation avec les **figures 6 à 8****,** l'invention permet l'utilisation d'embouts 30, ou canules, amovibles, destinés à relier la pompe aux tubulures d'aspiration et de refoulement des condensats assemblés par le technicien installant la pompe.

Comme représenté sur la **figure 6****,** la pompe est protégée par un boîtier 20, formant ainsi un dispositif de pompe.

Les parois latérales 21, 22 du boîtier 20 situées de part et d'autre de la pompe, comprennent chacune un orifice 211, 221 aligné sur l'axe longitudinal X de la pompe.

Ces orifices 211, 221 sont destinés à recevoir un embout amovible 30 prévu pour coopérer avec la pompe.

Plus précisément, une extrémité des embouts 30 est prévue pour coopérer avec les embouts fixes 19 de la pompe ou directement avec les orifices 211, 221, et l'autre extrémité des embouts 30 est prévue pour coopérer avec une tubulure, ou conduit, de circulation des condensats assemblée par le technicien.

Lorsqu'ils sont mis en place, les embouts 30 s'étendent selon l'axe longitudinal X de la pompe.

Selon l'invention, les embouts 30 sont amovibles, ou débrochables, c'est-à-dire qu'ils peuvent facilement et rapidement être extraits de la pompe et du boîtier 20 par un technicien, et remis en place, par exemple lors des opérations de maintenance de la pompe.

L'avantage est que les embouts amovibles peuvent ainsi être déconnectés de la pompe sans que les tubulures d'entrée et de sortie des condensats ne soient démontées.

En d'autres termes, les embouts amovibles jouent le rôle de pièce intermédiaire entre la pompe et les tubulures d'entrée et de sortie de condensats.

Ils permettent également de supprimer les contraintes exercées sur la pompe par le technicien puisque celles-ci sont alors exercées soit sur le boîtier 20, soit sur l'embout 30 du dispositif de pompe, et non sur le fût interne.

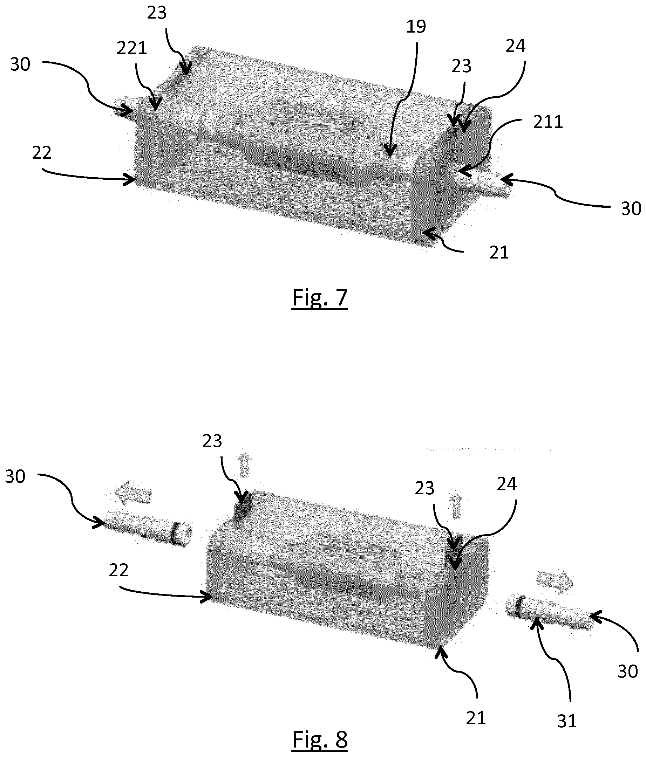

Un système de verrouillage et déverrouillage de ces embouts est prévu, visible sur les **figures 7 et 8****.**

La **figure 7** représente les embouts amovibles 30 en position verrouillée, c'est-à-dire insérés dans les orifices 211, 221 du boîtier 20 et maintenus chacun en position grâce à une languette 23 venant se loger dans la paroi latérale 21, 22 du boîtier.

Plus précisément, les parois 21, 22 comportent une glissière 24 à l'intérieur de laquelle la languette 23 vient coulisser selon un axe perpendiculaire à l'axe longitudinal X de la pompe.

Les embouts amovibles 30 comportent quant à eux au moins une gorge 31 à l'intérieur de laquelle la languette 23 vient en butée, en position verrouillée, de façon à empêcher tout retrait des embouts 30.

La **figure 8** représente les embouts 30 en position déverrouillée, c'est-à-dire extraits des orifices 211, 221 du boîtier 20, les languettes 23 ayant coulissé hors des glissières 24 du boîtier 20, et donc hors des gorges 31 des embouts.

Selon un mode de réalisation alternatif, les embouts amovibles 30 sont coudés.

Les embouts amovibles 30 peuvent également porter un clapet anti-retour et/ou anti-refoulement, permettant d'éviter que les condensats présents dans la tubulure ne fuient lorsque le technicien déconnecte les embouts de façon à intervenir sur la pompe.

## Revendications

1. Pompe à piston oscillant comprenant :
- un premier corps tubulaire (11) creux dans lequel se déplace un piston (5) ;
- un second corps tubulaire (12) creux s'étendant autour dudit premier corps tubulaire creux (11), portant un solénoïde (3) contrôlant le déplacement dudit piston (5),
**caractérisée en ce que** ledit premier corps tubulaire (11) et ledit second corps tubulaire (12) forment un élément de structure (10) monobloc, ledit premier corps tubulaire (11) étant traversant et comprenant deux extrémités ouvertes : une première extrémité (111) correspondant à une zone d'entrée de condensats et une seconde extrémité (112) correspondant à une zone de sortie de condensats.

2. Pompe à piston oscillant selon la revendication 1, **caractérisée en ce que** ledit élément de structure (10) monobloc présente au moins une nervure de solidarisation reliant ledit premier corps tubulaire (11) et ledit second corps tubulaire (12).

3. Pompe à piston oscillant selon la revendication 2, **caractérisée en ce que** ledit élément de structure (10) monobloc présente au moins une nervure centrale (14) de solidarisation.

4. Pompe à piston oscillant selon les revendications 1 à 3, **caractérisée en ce que** ledit élément de structure (10) monobloc présente un intervalle (13) destiné à recevoir au moins une bague magnétique (16) et présente des parois perpendiculaires à l'axe desdits premier et second corps tubulaires (11, 12), coopérant avec une carcasse magnétique (9).

5. Pompe à piston oscillant selon la revendication 4, **caractérisée en ce qu'**elle comprend des moyens de contrôle de la position longitudinale de la ou desdites bagues magnétiques (16) placés entre ledit premier corps tubulaire (11) et ledit second corps tubulaire (12).

6. Pompe à piston oscillant selon la revendication 5, **caractérisée en ce que** lesdits moyens de contrôle de la position longitudinale desdites bagues magnétiques (16) et/ou ladite nervure de solidarisation définissent un entrefer.

7. Pompe à piston oscillant selon les revendications 1 à 6, **caractérisée en ce que** ledit premier corps tubulaire (11) présente à au moins une de ses extrémités (111) une portion prévue pour accueillir un système anti-retour.

8. Pompe à piston oscillant selon les revendications 1 à 7, **caractérisée en ce que** ledit second corps tubulaire (12) porte des moyens de connexion d'au moins un embout fixe (19) apte à coopérer avec un embout amovible (30).

9. Pompe à piston oscillant selon la revendication 8, **caractérisée en ce qu'**elle comprend des moyens mobiles de verrouillage, aptes à coopérer avec ledit embout amovible (30), dans une position verrouillée, et permettant le retrait dudit embout amovibles (30), dans une position déverrouillée.

10. Pompe à piston oscillant selon la revendication 9, **caractérisée en ce que** lesdits moyens mobiles de verrouillage comprennent une languette (23) mobile en translation, venant se loger dans une gorge (31) dans ladite position de verrouillage.

11. Pompe à piston oscillant selon la revendication 10, **caractérisée en ce qu'**elle comprend un boîtier (20) portant lesdits moyens mobiles de verrouillage.

12. Pompe à piston oscillant selon les revendications 1 à 11, **caractérisée en ce que** ledit élément de structure (10) monobloc est réalisé en matière plastique.

13. Pompe à piston oscillant selon la revendication 12, **caractérisée en ce que** ledit élément de structure (10) monobloc est obtenu par injection.

## Patentansprüche

1. Schwingkolbenpumpe, die Folgendes beinhaltet:
- einen ersten Hohlrohrkörper (11), in dem sich ein Kolben (5) bewegt;
- einen zweiten Hohlrohrkörper (12), der sich um den ersten Hohlrohrkörper (11) erstreckt und der ein Solenoid (3) trägt, das die Bewegung des Kolbens (5) steuert,
**dadurch gekennzeichnet, dass** der erste Hohlrohrkörper (11) und der zweite Hohlrohrkörper (12) ein Monoblock-Strukturelement (10) bilden, wobei der erste Hohlrohrkörper (11) durchgängig ist und zwei offene Enden beinhaltet: ein erstes Ende (111), das einem Kondensateintrittsbereich entspricht, und ein zweites Ende (112), das einem Kondensataustrittsbereich entspricht.

2. Schwingkolbenpumpe nach Anspruch 1, **dadurch gekennzeichnet, dass** das Monoblock-Strukturelement (10) mindestens eine Befestigungsrippe aufweist, die den ersten Hohlrohrkörper (11) und den zweiten Hohlrohrkörper (12) verbindet.

3. Schwingkolbenpumpe nach Anspruch 2, **dadurch gekennzeichnet, dass** das Monoblock-Strukturelement (10) mindestens eine mittige Befestigungsrippe (14) aufweist.

4. Schwingkolbenpumpe nach den Ansprüchen 1 bis 3, **dadurch gekennzeichnet, dass** das Monoblock-Strukturelement (10) einen Zwischenraum (13) aufweist, der dazu bestimmt ist, mindestens einen Magnetring (16) aufzunehmen, und zu der Achse des ersten und des zweiten Hohlrohrkörpers (11, 12) senkrechte Wände aufweist, die mit einem Magnetgestell (9) zusammenwirken.

5. Schwingkolbenpumpe nach Anspruch 4, **dadurch gekennzeichnet, dass** sie Mittel zum Steuern der Längsposition des oder der Magnetringe (16), die zwischen dem ersten Hohlrohrkörper (11) und dem zweiten Hohlrohrkörper (12) angeordnet sind, beinhaltet.

6. Schwingkolbenpumpe nach Anspruch 5, **dadurch gekennzeichnet, dass** die Mittel zum Steuern der Längsposition der Magnetringe (16) und/oder die Befestigungsrippe einen Luftspalt definieren.

7. Schwingkolbenpumpe nach den Ansprüchen 1 bis 6, **dadurch gekennzeichnet, dass** der erste Hohlrohrkörper (11) an mindestens einem seiner Enden (111) einen Abschnitt aufweist, der für die Aufnahme einer Rücklaufsperre vorgesehen ist.

8. Schwingkolbenpumpe nach den Ansprüchen 1 bis 7, **dadurch gekennzeichnet, dass** der zweite Hohlrohrkörper (12) Mittel zum Verbinden mindestens eines feststehenden Endstücks (19) trägt, das dazu fähig ist, mit einem entfernbaren Endstück (30) zusammenzuwirken.

9. Schwingkolbenpumpe nach Anspruch 8, **dadurch gekennzeichnet, dass** sie mobile Verriegelungsmittel beinhaltet, die fähig sind, in einer verriegelten Position mit dem entfernbaren Endstück (30) zusammenzuwirken, und die das Zurückziehen des entfernbaren Endstücks (30) in eine entriegelte Position gestatten.

10. Schwingkolbenpumpe nach Anspruch 9, **dadurch gekennzeichnet, dass** die mobilen Verriegelungsmittel eine verschiebbare Zunge (23) beinhalten, die in der Verriegelungsposition in einer Nut (31) aufgenommen wird.

11. Schwingkolbenpumpe nach Anspruch 10, **dadurch gekennzeichnet, dass** sie ein Gehäuse (20) beinhaltet, das die mobilen Verriegelungsmittel trägt.

12. Schwingkolbenpumpe nach den Ansprüche 1 bis 11, **dadurch gekennzeichnet, dass** das Monoblock-Strukturelement (10) aus Kunststoff hergestellt ist.

13. Schwingkolbenpumpe nach Anspruch 12, **dadurch gekennzeichnet, dass** das Monoblock-Strukturelement (10) durch Spritzgießen erhalten wird.

## Claims

1. Oscillating piston pump comprising:
- a first hollow tubular body (11) in which a piston (5) moves;
- a second hollow tubular body (12) extending around said first hollow tubular body (11), carrying a solenoid (3) that controls the movement of said piston (5),
**characterised in that** said first tubular body (11) and said second tubular body (12) form a one-piece structural element (10), said first tubular body (11) being double-ended and comprising two open extremities: a first extremity (111) corresponding to a condensates entry zone and a second extremity (112) corresponding to a condensates exit zone.

2. Oscillating piston pump according to claim 1, **characterised in that** said one-piece structural element (10) has at least one attaching rib connecting said first tubular body (11) and said second tubular body (12).

3. Oscillating piston pump according to claim 2, **characterised in that** said one-piece structural element (10) has at least one central attaching rib (14).

4. Oscillating piston pump according to claims 1 to 3, **characterised in that** said one-piece structural element (10) has a gap (13) intended to receive at least one magnetic ring (16) and has walls perpendicular to the axis of said first and second tubular bodies (11, 12), cooperating with a magnetic casing (9) .

5. Oscillating piston pump according to claim 4, **characterised in that** it comprises means for controlling the longitudinal position of said magnetic ring(s)(16) positioned between said first tubular body (11) and said second tubular body (12).

6. Oscillating piston pump according to claim 5, **characterised in that** said means for controlling the longitudinal position of said magnetic rings (16) and/or said attaching rib define an air gap.

7. Oscillating piston pump according to claims 1 to 6, **characterised in that** said first tubular body (11) has at, at least, one of its extremities (111) a portion provided for accommodating a non-return system.

8. Oscillating piston pump according to claims 1 to 7, **characterised in that** said second tubular body (12) carries means for connecting at least one fixed end fitting (19) capable of cooperating with a detachable end fitting(30).

9. Oscillating piston pump according to claim 8, **characterised in that** it comprises movable locking means capable of cooperating with said detachable end fitting (30) in a locking position and allowing removal of said detachable end fitting (30) in an unlocking position.

10. Oscillating piston pump according to claim 9, **characterised in that** said movable locking means comprise a displaceable tongue (23), that locates in a recess (31) in said locking position.

11. Oscillating piston pump according to claim 10, **characterised in that** it comprises a housing (20) carrying said movable locking means.

12. Oscillating piston pump according to claims 1 to 11, **characterised in that** said one-piece structural element (10) is made from a plastic material.

13. Oscillating piston pump according to claim 12, **characterised in that** said one-piece structural element (10) is obtained by injection.
